# EUROPÄISCHE PATENTSCHRIFT

(11) **EP 1 410 484 B1**
(45) Veröffentlichungstag und Bekanntmachung des Hinweises auf die Patenterteilung: **16.03.2005**
(21) Anmeldenummer: 02742808.5
(22) Anmeldetag: 18.06.2002
(51) Int. Cl.: H02K 5/124, H02K 5/10

(54) **WELLENABDICHTUNG**
ELECTRIC MOTOR
MOTEUR ELECTRIQUE

(30) Priorität: 20.07.2001 DE 10134689
(43) Veröffentlichungstag der Anmeldung: 21.04.2004
(73) Patentinhaber: SIEMENS AKTIENGESELLSCHAFT, 80333 München (DE)
(72) Erfinder: SEVERIEN, Herbert, 63589 Linsengericht (DE)
(86) Internationale Anmeldenummer: PCT/DE2002/002214
(87) Internationale Veröffentlichungsnummer: WO 2003/012959

## Beschreibung

Die Erfindung bezieht sich auf einen Elektromotor mit einem Gehäuse, wobei das Gehäuse einen Innenraum aufweist, in dem der Rotor mit seiner Welle in zumindest einem Lager gelagert ist und wobei das Gehäuse eine Bohrung aufweist, in der eine Dichtung angeordnet ist, durch die die Welle des Rotors aus dem Innenraum des Gehäuses herausgeführt ist.

Elektromotoren werden heute sowohl als elektrisch kommutierte als auch als mechanisch kommutierte Elektromotoren in verschiedensten Anwendungen überall in der Welt eingesetzt. Dabei soll der Elektromotor häufig etwas mit seiner Welle antreiben, das in einer Flüssigkeit, beispielsweise Öl, gelagert ist. Hierzu wird üblicherweise die Öffnung, durch die die Welle des Rotors des Elektromotors aus dem Gehäuse herausgeführt ist, mit einer Dichtung gegen das Eindringen von Flüssigkeit geschützt.

Beim Betrieb des Elektromotors erwärmt sich die Luft in dem Innenraum des Gehäuses des Elektromotors. Dies führt dazu, daß sich die in dem Gehäuse des Elektromotors eingeschlossene Luft adiabatisch ausdehnt. Diese adiabatische Ausdehnung der Luft in dem Innenraum des Gehäuses des Elektromotors hat die Wirkung, die Dichtung aus dem Gehäuse des Elektromotors nach außen hin hinauszudrücken. Andererseits hat die Flüssigkeit die Tendenz, in den Innenraum des Gehäuses des Elektromotors hineinzukriechen. Dabei kann auch der Druck der Flüssigkeit so groß sein, daß die Flüssigkeit die Dichtung in das Gehäuse des Elektromotors hineindrückt. Aus diesen Gründen weist üblicherweise ein Elektromotor, dessen Welle zum Antrieb einer zumindest teilweise in einer Flüssigkeit angeordneten Vorrichtung vorgesehen ist, üblicherweise eine besonders kurze Lebensdauer auf.

Aus der entgegengehaltenen US-A-47 55 115 ist ein Gehäuse eines Kompressors bekannt, aus dessen Innenraum eine Antriebswelle herausgeführt und mit einer Kurbelwelle eines Verbrennungsmotors verbunden ist. Dabei weist das Gehäuse eine Stufenbohrung auf, in deren großer Stufe eine Dichtung angeordnet ist, durch die die Antriebswelle aus dem Innenraum des Gehäuses herausgeführt ist und die sich mit einem starren Käfig axial an dem Übergang von der großen Stufe zur kleinen Stufe der Stufenbohrung abstützt.

Der Erfindung liegt die Aufgabe zugrunde, einen Elektromotor der oben genannten Art anzugeben, dessen Gehäuse einen Innenraum aufweist, das zumindest an einer Stelle besonders zuverlässig gegen das Berauswandern der Dichtung und das Eindringen von Flüssigkeit geschützt ist.

Diese Aufgabe wird erfindungsgemäß dadurch gelöst, dass die Bohrung eine annähernd stufenförmige Bohrung ist, die einen ersten Durchmesser mit einem ersten Maß und einen zweiten Durchmesser mit einem zweiten Maß aufweist, wobei das erste Maß größer als das zweite Maß und das zweite Maß dem Außenraum des Gehäuses zugewandt ist und wobei die Dichtung mit einer Außenkontur aus gummielastischem Material derart in der Stufenbohrung angeordnet ist, daß sie in dem ersten Durchmesser der stufenförmigen Bohrung entspannt und in dem zweiten Durchmesser der stufenförmigen Bohrung komprimiert ist.

Die Erfindung geht dabei von der Überlegung aus, dass der Innenraum des Gehäuses des Elektromotors dann besonders zuverlässig gegen ein Heraus wandern der Dichtung aus dem Gehäuse geschützt ist, wenn die Dichtung in dem Gehäuse so angeordnet ist, dass ein mechanisches Herauswandern der Dichtung aus dem Gehäuse zuverlässig verhindert ist. Dies ist zuverlässig gewährleistet, wenn das Gehäuse eine mechanische Barriere aufweist, durch die die Dichtung zuverlässig in dem Gehäuse gesichert ist. Eine derartige Barriere ist eine annähernd stufenförmige Bohrung, die sich entweder stufenförmig in Richtung des Außenraums des Gehäuses hin verjüngt oder sich alternativ sowohl zum Innenraum des Gehäuses hin als auch zum Außenraum des Gehäuses hin verjüngt. In dieser stufenförmigen Bohrung ist eine Dichtung anzuordnen, die bedingt durch die Form der annähernd stufenförmigen Bohrung in den unterschiedlichen Bohrungsstufen verschiedene Durchmesser einnimmt.

Vorteilhafterweise ist die Dichtung überwiegend aus gummielastischem Material gefertigt. Gummielastisches Material gewährleistet besonders zuverlässig ein Zusammendrücken und andererseits Sichausdehnen der Dichtung in den einzelnen Bohrungsstufen.

Vorteilhafterweise umschließt die Dichtung eine Stahlarmierung vollständig. Die Stahlarmierung verleiht der Dichtung ausreichende Festigkeit, damit diese auch beim Gebrauch über besonders lange Zeiträume hinweg ihre Form annähernd unverändert erhält.

Vorteilhafterweise umschließt die Dichtung radial mit einer Dichtlippe eine Wurmfeder. Die Wurmfeder ist dabei so ausgelegt, dass sie die Dichtlippe der Dichtung gegen die Welle des Rotors des Elektromotors drückt. Hierdurch ist besonders zuverlässig auch bei einem Gebrauch der Dichtung über besonders lange Zeiträume hinweg besonders zuverlässig gewährleistet, dass die Dichtung mit ihrer Dichtlippe eng am Außenumfang der Welle des Rotors des Elektromotors anliegt.

Vorteilhafterweise ist der Elektromotor in einem Ventiltrieb eines Verbrennungsmotors eines Kraftfahrzeugs einsetzbar. Der Ventiltrieb eines Verbrennungsmotors eines Kraftfahrzeugs ist üblicherweise zumindest teilweise in einem Ölbad, angeordnet. Hierfür ist der oben genannte Elektromotor besonders geeignet, da aufgrund seiner Konstruktion ein Eindringen von Öl in den Innenraum des Gehäuses des Elektromotors zuverlässig verhindert ist und gleichzeitig ein Herauswandern der Dichtung aus dem Gehäuse des Elektromotors zuverlässig vermieden ist.

Die mit der Erfindung erzielten Vorteile bestehen insbesondere darin, dass der Festsitz von Dichtungen, also Gummiformteiten, in Bohrungen zuverlässig gewährleistet ist. Dies gilt auch dann, wenn Druckerhöhungen der Luft in Innenraum des Gehäuses auftreten und/oder Druckänderungen in dem Außenraum des Gehäuses auftreten.

Ein Ausführungsbeispiel der Erfindung wird anhand einer Zeichnung näher erläutert. Darin zeigen die Figuren:
- Fig. 1: schematisch ein Kraftfahrzeug mit einem Verbrennungsmotor,
- Fig. 2: schematisch einen Ausschnitt eines Elektromotors, der ein Gehäuse mit einer Bohrung aufweist, durch die die Welle des Rotors aus dem Innenraum des Gehäuses in den Außenraum des Gehäuses hindurchgeführt ist,
- Fig. 3: schematisch den Ausschnitt A aus Fig. 2 mit der Dichtung, die den Innenraum des Gehäuses des Elektromotors zum Außenraum hin abdichtet.

Einander entsprechende Teile sind in allen Figuren mit den gleichen Bezugszeichen versehen.

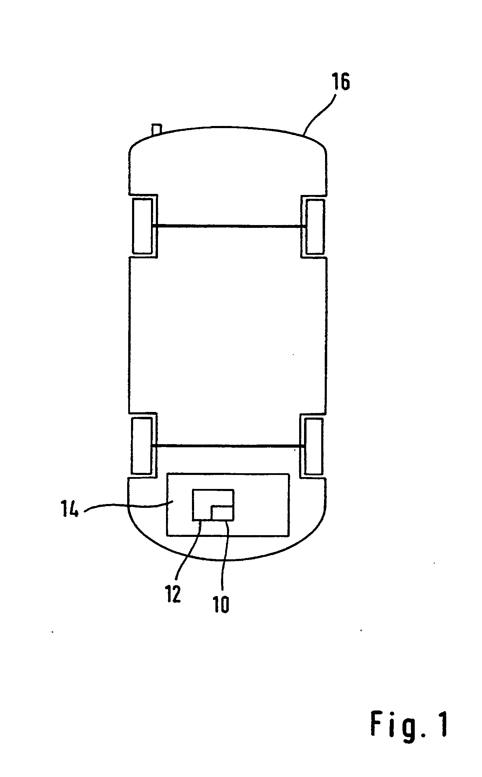

Der Elektromotor 10 gemäß den Figuren 1 bis 3 ist gemäß Figur 1 in einem Ventiltrieb 12 eines Verbrennungsmotors 14 eines Kraftfahrzeugs 16 angeordnet. Der Ventiltrieb 12 ist dazu vorgesehen, ein Ventil, ein Verschlußorgan, zu öffnen und zu schließen. Das Ventil ist dabei in dem Zylinderkopf eines Verbrennungsmotors angeordnet. Das Ventil sowie der Zylinderkopf sind in der Zeichnung nicht näher dargestellt.

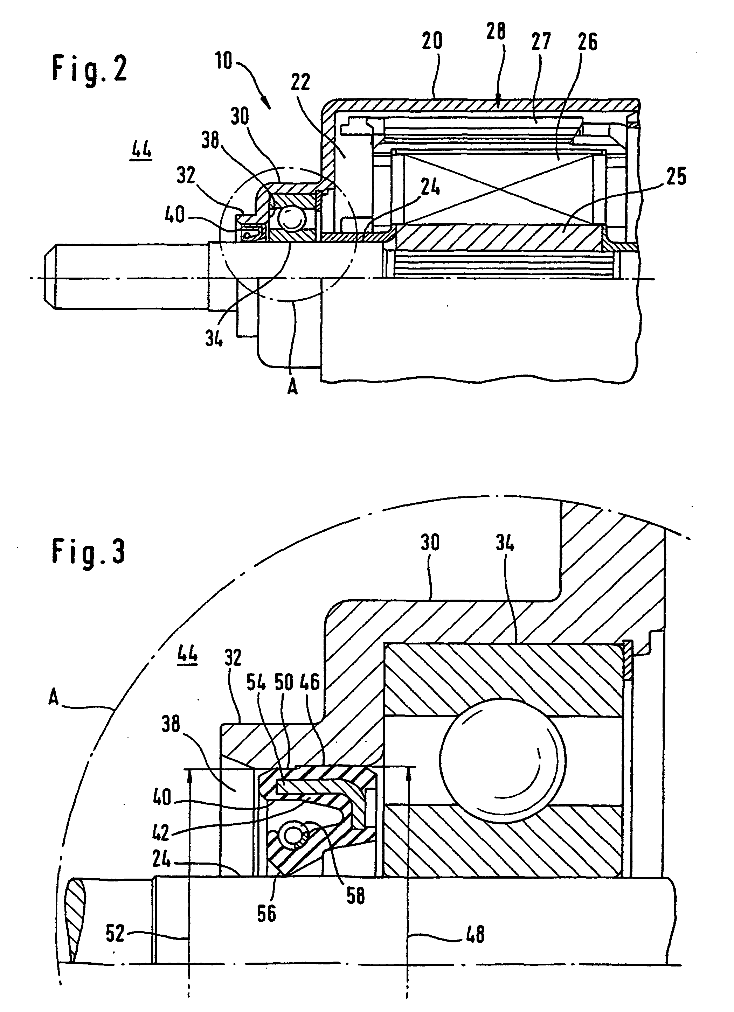

Fig. 2 zeigt einen Ausschnitt des Elektromotors 10. Der Elektromotor 10 weist ein Gehäuse 20 mit einem Innenraum 22 auf. In dem Innenraum 22 des Gehäuses 20 ist eine Welle 24 angeordnet, die u.a. mit dem Anker 25 den Rotor 26 des Elektromotors 10 bildet. An der Innenwand des Gehäuses 20 sind Permanentmagnete 27 angeordnet. Die Permanentmagnete 27 bilden u.a. mit dem Gehäuse 20 den Stator 28 Elektromotors 10.

In dem dargestellten Ausschnitt des Elektromotors 10 ist der Bereich des Gehäuses 20 des Elektromotors 10 zu sehen, in welchem die Welle 24 des Elektromotors 10 aus dem innenraum 22 des Gehäuses 20 herausgeführt ist. Hierzu verjüngt sich das Gehäuse 20 des Elektromotors 10 in diesem Bereich des Gehäuses 20 annähernd stufenförmig in einen ersten Abschnitt 30 und einen zweiten Abschnitt 32. Der Außenumfang des ersten Abschnitts 30 des Gehäuses 20 ist dabei größer als der Außenumfang des zweiten Abschnitts 32 des Gehäuses 20.

In dem ersten Abschnitt 30 des Gehäuses 20 ist ein als Rillenkugellager ausgebildetes Lager 34 angeordnet, in dem die Welle 24 des Elektromotors 10 gelagert ist. Üblicherweise ist die Welle 24 des Elektromotors 10 noch an einer zweiten Stelle gelagert, was in der Zeichnung nicht näher dargestellt ist. Der zweite Abschnitt 32 dieses Bereichs 28 des Gehäuses 20 weist eine annähernd stufenförmige Bohrung 38 auf, in der eine Dichtung 40 angeordnet ist. Die Dichtung 40 ist aus gummielastischem Material 42 gefertigt. Die Dichtung 40 ist dabei als Radialwellendichtring mit einer Außenkontur aus gummielastischem Material 42 ausgeführt. Diese Dichtung 40 schließt den Innenraum 22 des Gehäuses 20 des Elektromotors 10 hermetisch gegen den Außenraum 44 des Gehäuses 20 ab. Die Dichtung 40, die als Radialwellendichtring ausgeführt ist, ist so in dem Gehäuse 20 des Elektromotors 10 angeordnet, dass bei einem Druckanstieg der im Innenraum 22 des Gehäuses 20 des Elektromotors 10 befindlichen Luft die Dichtung 40 nicht aus dem Gehäuse 20 des Elektromotors 10 hinausgedrückt wird. Die Anordnung, die dieses Herauswandem der Dichtung 40 ermöglicht, ist in dem Bereich A der Figur 2 angeordnet und in Figur 3 im Detail gezeigt.

Die Dichtung 40 ist gemäß Fig. 3 in einer annähernd stufenförmigen Bohrung 38 angeordnet. Die annähernd stufenförmige Bohrung 38 weist dabei einen ersten Durchmesser 46 oder eine erste Stufe mit einem ersten Maß 48 auf. Weiterhin weist die annähernd stufenförmige Bohrung 38 einen zweiten Durchmesser 50 oder eine zweite Stufe mit einem zweiten Maß 52 auf. Hierbei ist das erste Maß 48 größer als das zweite Maß 52. Das zweite Maß 52 ist dabei dem Außenraum 44 des Gehäuses 20 zugewandt. Das erste Maß 48 der stufenförmigen Bohrung 38 ist zwischen dem zweiten Durchmesser 50 der annähernd stufenförmigen Bohrung 38 und dem Lager 34 angeordnet.

Die Dichtung 40 wird bei der Fertigung des Elektromotors 10 in das Gehäuse 20 eingepreßt. Dabei wird die Dichtung 40 von dem zweiten Maß 52 des zweiten Durchmessers 50 der stufenförmigen Bohrung 38 komprimiert. Gelangt die Dichtung 40 beim Einpressen in das Gehäuse 20 des Elektromotors 10 in den Bereich. des ersten Durchmessers 46 mit dem ersten Maß 48 der stufenförmigen Bohrung 38, so entspannt sich die Dichtung 40 und weist einen größeren Außenumfang in dem ersten Durchmesser 46 der stufenförmigen Bohrung 38 als in dem zweiten Durchmesser 50 der stufenförmigen Bohrung 38 auf. Diese Durchmesserdifferenz der Dichtung 40 aufgrund der vorgegebenen Form der stufenförmigen Bohrung 38 bewirkt, dass durch die aufgrund von Temperaturänderungen sich aufbauenden Druckkräfte im Innenraum 22 des Gehäuses 20 die Dichtung 40 nicht mehr aus dem Dichtungsschacht herausschiebbar ist.

Damit die Dichtung 40 auch über besonders lange Zeiträume hinweg konstant ihre Form hält, weist die Dichtung 40 eine Stahlarmierung 54 auf, die von der Dichtung 40 umschlossen ist und annähernd ringförmig ausgebildet ist. Diese Stahlarmierung 54 gewährleistet zuverlässig eine Formstabilität der Dichtung 40 in Richtung des Gehäuses 20.

Weiterhin umfaßt die Dichtung 40 eine Dichtlippe 56, die durch eine Wurmfeder 58 an die Welle 24 des Elektromotors 10 gedrückt wird. Dabei umschließt die Dichtung 40 die Wurmfeder 58 radial in der Weise, daß ein Teilbereich der Wurmfeder 58 nicht von dem gummielastischen Material 42 der Dichtung 40 umschlossen ist. Hierdurch ist auch über besonders lange Zeiträume hinweg eine besonders gute Dichtwirkung der Dichtung 40 in Richtung auf die Welle 24 des Rotors 26 des Elektromotors 10 zuverlässig gewährleistet ist.

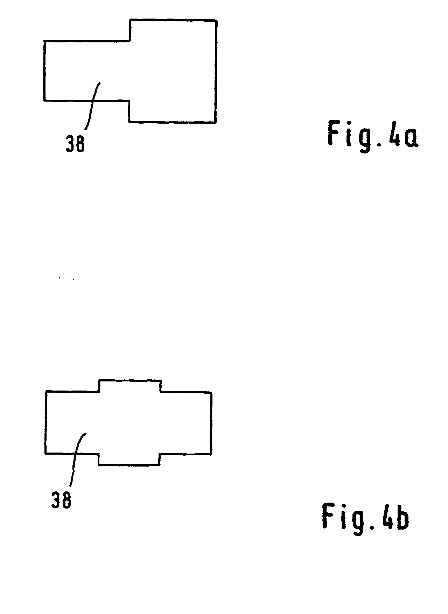

Das Profil der in Figur 3 gezeigten annähernd stufenförmigen Bohrung 38 zeigt Figur 4a. Alternativ zu dem Profil der annähernd stufenförmigen Bohrung gemäß Figur 3 kann die annähernd stufenförmige Bohrung 38 ein Profil aufweisen, das sich sowohl zum Innenraum 20 des Gehäuses hin als auch zum Außenraum 44 des Gehäuses 20 hin verjüngt, was in Figur 4b dargestellt ist. Bei dem Profil der annähernd stufenförmigen Bohrung gemäß Figur 4b ist zuverlässig gewährleistet, daß die in der Bohrung 38 angeordnete Dichtung 40 bei Abwesenheit von starken äußeren Kräften weder in das Gehäuse 20 hinein noch aus dem Gehäuse 20 heraus wandert.

Durch die Anordnung der Dichtung 40 in der stufenförmigen Bohrung 44 des Gehäuses 20 des Elektromotors 10 schließt die Dichtung 40 das Gehäuse 20 des Elektromotors 10 auch dann zuverlässig gegen den Außenraum 44 des Gehäuses 20 hermetisch ab, wenn im Innenraum 22 des Gehäuses 20 Druckänderungen der Luft aufgrund von Temperaturänderungen auftreten.

## Patentansprüche

1. Elektromotor (10) mit einem Gehäuse (20), wobei das Gehäuse (20) einen Innenraum (22) aufweist, in dem der Rotor (26) mit seiner Welle (24) in zumindest einem Lager (34) gelagert ist und wobei das Gehäuse (20) eine Bohrung aufweist, in der eine Dichtung angeordnet ist, durch die die Welle (24) des Rotors (26) aus dem Innenraum (22) des Gehäuses (20) herausgeführt ist, **dadurch gekennzeichnet, daß** die Bohrung eine annähernd stufenförmige Bohrung (38) ist, die einen ersten Durchmesser (46) mit einem ersten Maß (48) und einen zweiten Durchmesser (50) mit einem zweiten Maß (52) aufweist, wobei das erste Maß (48) größer als das zweite Maß (52) und das zweite Maß (52) dem Außenraum (44) des Gehäuses (20) zugewandt ist und wobei die Dichtung (40) mit einer Außenkontur aus gummielastischem Material (42) derart in der Stufenbohrung (38) angeordnet ist, daß sie in dem ersten Durchmesser (46) der stufenförmigen Bohrung entspannt und in dem zweiten Durchmesser (50) der stufenförmigen Bohrung komprimiert ist.

2. Elektromotor (10) nach Anspruch 1 **dadurch gekennzeichnet, daß** die Dichtung (40) überwiegend aus gummielastischem Material (42) gefertigt ist.

3. Elektromotor (10) nach Anspruch 1 oder 2 **dadurch gekennzeichnet, daß** die Dichtung (40) eine Stahlarmierung (54) vollständig umschließt.

4. Elektromotor (10) nach einem der Ansprüche 1 bis 3 **dadurch gekennzeichnet, daß** die Dichtung (40) radial mit einer Dichtlippe (56) eine Wurmfeder (56) umschließt.

5. Elektromotor (10) nach einem der Ansprüche 1 bis 4 **dadurch gekennzeichnet, daß** der Elektromotor (10) in einem Ventiltrieb (12) eines Verbrennungsmotors (14) eines Kraftfahrzeugs (16) einsetzbar ist.

## Claims

1. Electric motor (10) with a housing (20), the housing (20) having an inner space (22) in which the rotor (26) is mounted with its shaft (24) in at least one bearing (34), and the housing (20) having a bore in which is arranged a seal through which the shaft (24) of the rotor (26) is led out of the inner space (22) of the housing (20), **characterized in that** the bore is an approximately step-shaped bore (38) which has a first diameter (46) with a first dimension (48) and a second diameter (50) with a second dimension (52), the first dimension (48) being greater than the second dimension (52) and the second dimension (52) facing the outer space (44) of the housing (20), and the seal (40) being arranged with an outer contour consisting of an elastomeric material (42) in the stepped bore (38) in such a way that it expands in the first diameter (46) of the step-shaped bore and is compressed in the second diameter (50) of the step-shaped bore.

2. Electric motor (10) according to Claim 1, **characterized in that** the seal (40) is manufactured predominantly from elastomeric material (42).

3. Electric motor (10) according to Claim 1 or 2, **characterized in that** the seal (40) completely surrounds a steel reinforcement (54).

4. Electric motor (10) according to one of Claims 1 to 3, **characterized in that** the seal (40) radially surrounds, with a sealing lip (56), a worm spring (56).

5. Electric motor (10) according to one of Claims 1 to 4, **characterized in that** the electric motor (10) can be used in a valve drive (12) of an internal combustion engine (14) of a motor vehicle (16).

## Revendications

1. Moteur électrique (10) avec une carcasse (20), la carcasse (20) ayant un espace intérieur (22) dans lequel le rotor (26) est monté avec son arbre (24) sur au moins un palier (34) et la carcasse (20) comportant un forage dans lequel est monté un joint à travers lequel l'arbre (24) du rotor (26) sort de l'espace intérieur (22) de la carcasse (20) **caractérisé par le fait que** le forage est un forage (38) approximativement étagé, qui a un premier diamètre (46) avec une première dimension (48) et un deuxième diamètre (50) avec une deuxième dimension (52), la première dimension (48) étant supérieure à la deuxième dimension (52) et la deuxième dimension (52) étant tournée vers l'espace extérieur (44) de la carcasse (20) et le joint (40) étant monté dans le forage étagé (38) avec un contour extérieur en matière de gomme élastique (42) de telle manière qu'il se détend dans le premier diamètre (46) du forage étagé et qu'il est comprimé dans le deuxième diamètre (50) du forage étagé.

2. Moteur électrique (10) selon la revendication 1 **caractérisé par le fait que** le joint (40) est fabriqué principalement en matière de gomme élastique (42).

3. Moteur électrique (10) s elon la revendication 1 ou 2 **caractérisé par le fait que** le joint (40) englobe complètement une armature en acier (54).

4. Moteur électrique (10) selon l'une des revendications 1 à 3 **caractérisé par le fait que** le joint (40) englobe radialement un ressort en boudin (56) par une lèvre d'étanchéité (56).

5. Moteur électrique (10) selon l'une des revendications 1 à 4 **caractérisé par le fait que** le moteur électrique (10) peut être mis en oeuvre dans une commande de soupapes (12) d'un moteur à combustion interne (14) d'un véhicule automobile (16).
